# EUROPÄISCHE PATENTSCHRIFT

(11) **EP 2 057 420 B1**
(45) Veröffentlichungstag und Bekanntmachung des Hinweises auf die Patenterteilung: **15.04.2015**
(21) Anmeldenummer: 07801644.1
(22) Anmeldetag: 14.08.2007
(51) Int. Cl.: F24D 19/10

(54) **VERFAHREN ZUR DURCHFÜHRUNG EINER ROHRNETZANALYSE EINES ROHRNETZES**
METHOD FOR CARRYING OUT A PIPE NETWORK ANALYSIS IN A NETWORK OF PIPES
PROCÉDÉ POUR EXÉCUTER UNE ANALYSE DE RÉSEAU DE TUYAUTERIE DANS UN RÉSEAU DE TUYAUTERIE

(30) Priorität: 01.09.2006 DE 102006041346
(43) Veröffentlichungstag der Anmeldung: 13.05.2009
(73) Patentinhaber: WILO SE, 44263 Dortmund (DE)
(72) Erfinder: GROSSE WESTHOFF, Edgar, 59269 Beckum (DE); STRELOW, Günter, 44801 Bochum (DE); KETTNER, Thorsten, 45711 Datteln (DE)
(74) Vertreter: Cohausz, Helge B.
(86) Internationale Anmeldenummer: PCT/EP2007/007167
(87) Internationale Veröffentlichungsnummer: WO 2008/025452

(56) Entgegenhaltungen:
- EP-A- 0 866 279
- M. BENJAMIN: "Analysy of complex pipe networks with multiple loops and inlets and outlets" INTERNET ARTICLE, 2005, XP002463765 HTTP://FACULTY.WASHINGTON.EDU/MARKBENJ/CEE 342/ABBREVIATED%20HARDY-CROSS.PDF

## Beschreibung

Die Erfindung betrifft ein Verfahren zur Durchführung einer Rohrnetzanalyse eines Rohrnetzes gemäß dem Oberbegriff des Anspruchs 1. Ein solches Verfahren ist Dokument EP-A-0866 279 schon bekannt.

Rohrnetze kommen in allen Bereichen der Technik vor. Beispiele sind die Prozesstechnik in der chemischen Industrie oder der Lebensmittelindustrie, die Petrochemie, Wasserver- und -entsorgung usw.

Insbesondere kommen Rohrnetze in Gebäuden vor, beispielsweise um fluide Medien, insbesondere Flüssigkeiten, wie z.B. Wasser, innerhalb eines solchen Rohrnetzes umlaufen zu lassen, um beispielsweise eine Beheizung oder aber auch eine Kühlung eines Gebäudes durchführen zu können. Für die Steuerung oder Regelung des Fluidflusses in einem Rohrnetz ist es dabei von besonderer Relevanz, dass es bekannt ist, wo das umgewälzte Fluid gemeinsame Rohrabschnitte durchfließt, wo es an Verzweigungspunkten aufgeteilt wird und insbesondere wie groß die Rohrwiderstände der einzelnen Rohrabschnitte sind.

Derartige Informationen können z.B. in neuen Anwendungen relevant werden, bei denen Rohrnetze für die Heizanwendungen derart ausgebildet sind, dass jedem Wärmeübertrager statt eines Thermostatventils eine dezentrale Pumpe zugeordnet ist.

Hierbei bedeutet die Zuordnung einer dezentralen Pumpe zu einem Wärmeübertrager, dass je eine Pumpe, insbesondere eine Pumpe alleine pro Wärmeübertrager vorgesehen ist, um für den Fluidfluss durch den Wärmeübertrager zu sorgen. Hierbei kann eine dezentrale Pumpe unmittelbar räumlich bei einem Wärmeübertrager angeordnet sein, wie es von der Anordnung üblicher Thermostatventile bekannt ist, also beispielsweise im Vorlauf, oder auch im Rücklauf. Dies ist jedoch nicht zwingend notwendig. Eine dezentrale Pumpe kann irgendwo in einem Teilnetz eines Rohrnetzes angeordnet sein, in dem sich nur die wenigstens eine dezentrale Pumpe und der zugeordnete Wärmeübertrager befinden. Somit können z.B. alle dezentralen Pumpen aller Wärmeübertrager auch räumlich zentral angeordnet sein, z.B. in der Nähe eines Wärmeerzeugers, beispielsweise im Keller eines Gebäudes.

Die Erfindung ist jedoch nicht auf diesen Anwendungsbereich beschränkt, sondern ist auch für andere Anwendungen einsetzbar, z.B. bei der Heizung und Kühlung von Gebäuden, auch beim Einsatz klassischer Thermostatventile oder anderer Regulierungsmechanismen. Insbesondere ist die Erfindung anwendbar auf Rohrnetze, bei denen vorübergehend zur Analyse dezentrale Pumpen eingesetzt werden.

Der Vorteil, ein Rohrnetz hinsichtlich der oben genannten Kriterien genau zu kennen, liegt beispielsweise darin, dass zur Erreichung gewünschter Förderströme oder sonstiger Bedingungen es nicht mehr einer Regelung bedarf, sondern dass eine Steuerung der Komponenten im Rohrnetz, wie z.B. von Ventilen oder Pumpen vorgenommen werden kann rein anhand berechneter Daten.

Im Fall einer Neuprojektierung eines Gebäudes, bei der ein Rohrnetzplan von Anfang an erstellt wird, sind diese Daten im Prinzip bekannt, da den Ingenieuren für die weitere Auslegung und Planung von Heiz- oder auch Kühlanlagen z.B. mit Ventilen oder Pumpen somit sämtliche Informationen über das Rohrnetz von Anfang an zur Verfügung stehen, also z.B. über gemeinsame Rohrnetzabschnitte, Endzweige, Verzweigungspunkte, Widerstände der Rohrnetzabschnitte etc.

Dabei ist die Berechnung mit erheblichen Ungenauigkeiten verbunden und es können sich während der Bauphase Abweichungen von der ursprünglichen Planung ergeben. Es ist daher eine Aufgabe der Erfindung solche Abweichungen und mögliche Planungsfehler nach Fertigstellung des Gebäudes festzustellen und zu analysieren.

Darüber hinaus gibt es eine Vielzahl von Fällen, beispielsweise bei der Modernisierung von Gebäuden, wo auf ursprüngliche Rohrnetzpläne nicht zurückgegriffen werden kann und insofern Informationen über die Topologie eines Rohrnetzes nicht bekannt sind.

Es ist somit weiterhin die Aufgabe der Erfindung, beliebige Rohrnetze, insbesondere für die Heiz- oder auch für die Kühlanwendung in Gebäuden, zu analysieren, um Informationen über die Widerstände und Anordnung von Endzweigen oder gemeinsamen Rohrnetzabschnitten des betrachteten Rohrnetzes zu gewinnen. Beispielsweise können so genügend Informationen zur Verfügung gestellt werden, um Steuerungs- und Regelungsaufgaben in Rohrnetzen jeglicher Art durchführen zu können. Des Weiteren können die Informationen der durchgeführten Rohrnetzanalyse beispielsweise zur Optimierung der hydraulischen Anlage, insbesondere für einen hydraulischen Abgleich verwendet werden.

Gelöst wird die Erfindung durch ein Verfahren zur Durchführung einer Rohrnetzanalyse eines Rohrnetzes beliebiger Art, bei dem jedem Endzweig eines Rohrnetzes eine Pumpe, insbesondere mit bekannter Pumpenkennlinie zugeordnet ist/wird. Eine solche Pumpe wird im Sinne der Erfindung als eine dezentrale Pumpe bezeichnet. Hierbei ist es, wie eingangs genannt, unerheblich, ob die dezentrale Pumpe einem Endzweig nur hydraulisch oder auch räumlich zugeordnet ist.

Es können bevorzugt alle Pumpen identisch ausgeführt sein und können somit dieselbe Kennlinie haben. Dies vereinfacht das Verfahren, ist jedoch nicht zwingend notwendig. Als weitere Alternative können auch dezentrale Pumpen mit unbekannter Kennlinie verwendet werden, bei denen die Förderhöhe der Pumpe über die Messung mittels eines Sensors, beispielsweise eines Differenzdrucksensors bestimmt wird.

Bezogen auf das Anwendungsbeispiel bei Heizrohrnetzen können die Endzweige z.B. durch die Positionen der Wärmeübertrager in einem Gebäude identifiziert werden. In einem Heizrohrnetz ist somit jedem Wärmeübertrager eine solche dezentrale Pumpe zugeordnet und übernimmt die Durchflussregelung, z.B. an Stelle eines üblicherweise bekannten Thermostatventils. Analog können in einer Kühlanlage die Endzweige durch die Positionierung der zur Kühlung dienenden Wärmeübertrager oder Kühlaggregate gegeben sein. Unter einem Wärmeübertrager werden allgemein alle Anordnungen verstanden, mittels denen Wärme aufgenommen wird (zu Kühlzwecken) oder abgegeben wird (zu Heizzwecken). Beispielsweise sind auch Flächen-Wärmeübertrager umfasst, wie sie z.B. bei Fußbodenheizungen oder Kühlflächen vorkommen.

Gemäß der Erfindung ist es weiterhin vorgesehen, dass für Paare (ein Paar gleich zwei Pumpen) von Pumpen jeweils wenigstens ein Paar von ausgewählten Betriebszuständen bei den Pumpen eingestellt wird, und wobei für jedes Paar von Betriebszuständen der Gesamtvolumenstrom im Rohrnetz oder die Teilvolumenströme in den Endzweigen bestimmt werden. Anschließend können der Leitungswiderstand K_{IJ} der von beiden Pumpen gemeinsam genutzten Rohrabschnitte und der Endzweigwiderstand R_{IJ} des ausschließlich nur von der Pumpe P_{I} genutzten Endzweiges berechnet werden anhand der bestimmten und durch die eingestellten Betriebszustände gegebenen Größen. Hierbei werden durch die beiden Indizes I und J die beiden betrachteten Pumpen identifiziert.

Der wesentliche Kerngedanke der Erfindung ist es, dass mittels des erfindungsgemäßen Verfahrens ein beliebiges Rohrnetz zergliedert wird durch die Zuordnung jeweils einer dezentralen Pumpe zu einem Endzweig, so dass bei Betrachtung eines Paares von Pumpen, d.h. einer Kombination von zwei Pumpen ein Teilbereich des gesamten Rohrnetzes einer Untersuchung unterzogen werden kann hinsichtlich des Leitungswiderstands, der von diesen zwei betrachteten Pumpen gemeinsam genutzten Rohrabschnitte und der Zweigwiderstände des ausschließlich nur von einer der beiden Pumpen genutzten Endzweiges dieses untersuchten Rohrnetzteilbereiches.

Es besteht so die Möglichkeit, durch die Auswahl verschiedener Kombinationen von Pumpenpaaren jeweils immer verschiedene Teilbereiche des Gesamtrohrnetzes einer Untersuchung zu unterziehen, so immer bezogen auf das betrachtete Pumpenpaar die Widerstände von den gemeinsamen Rohrnetzabschnitten und jeweiligen Endzweigen zu bestimmen, so dass anhand einer fortlaufenden Analyse mit einer Vielzahl von möglichen Paaren von Pumpen, gegebenenfalls auch mit allen möglichen Kombinationen von zwei Pumpen, sukzessive Informationen über das gesamte Rohrnetz angesammelt werden können und somit das gesamte Rohrnetz hinsichtlich der Widerstände und/oder gegenseitigen Anordnung von jeweils gemeinsamen Rohrnetzabschnitten und Endzweigen analysiert ist.

Hierbei ist es vorteilhaft, wenn bei der Analyse eines Teilnetzes mit einem bestimmten Pumpenpaar sichergestellt wird, dass keine Durchströmung eines anderen Teilbereiches des Rohrnetzes erfolgt. Hierfür kann es vorgesehen sein, z.B. Magnetventile und/oder Rückflussverhinderer einzusetzen, so dass nur in dem betrachteten Teilnetz der beiden ausgewählten Pumpen eine Fluidförderung erfolgt.

Aus der Drehzahl n_{RV} und der bekannten Kennlinie der Pumpe kann der Öffnungsdruck des Rückflussverhinderers berechnet werden. Dieser kann ggfs. für jeden Endzweig einzeln bestimmt und in der Berechnung der Rohrnetzwiderstände durch Subtraktion berücksichtigt werden.

Besonders vorteilhaft im Sinne der Erfindung ist die Verwendung von Rückflussverhinderern ohne Federbelastung, bei denen der Öffnungdruck vernachlässigbar klein ist. Hierbei kann es sich beispielsweise um handelsübliche federbelastete Rückflussverhinderer handeln, bei denen die Feder entfernt wurde, oder aber auch um ein von der Pumpe mittels der Flüssigkeit bewegtes Absperrelement in der Rohrleitung, beispielsweise einen Kolben oder eine Kugel in einer entsprechenden Aufnahme.

Das Verfahren kann ebenso genutzt werden, Rohre mit besonders hohem Leitungswiderstand ausfindig zu machen, wie er z.B. durch Verschmutzung der Rohre entstehen kann. Hierdurch können z.B. Sanierungsmaßnahmen eingegrenzt werden.

Hierbei macht sich die Erfindung weiterhin zunutze, dass ein Rohrnetz bzw. ein ausgewählter Teilbereich eines Rohrnetzes grundsätzlich durch die dem Fachmann bekannten physikalischen Zusammenhänge, wie z.B. Rohrnetzgleichungen oder andere Gleichungen charakterisiert ist. So können anhand dieser physikalischen Zusammenhänge z.B. der Druckabfall im gemeinsam genutzten Rohrnetzabschnitt zweier Pumpen, der Druckabfall in den jeweiligen Endzweigen der betrachteten Pumpen und der Druckabfall über einer Pumpe in Relation zueinander gesetzt werden.

Hierbei versteht der Fachmann den Druckabfall auch als so genannte Förderhöhe, insbesondere im Zusammenhang mit Kreiselpumpen. Man kann somit für jede Paarung von zwei miteinander kombinierten Pumpen ein Gleichungssystem aufstellen mit einer Vielzahl von Variablen, welches jedoch ohne festgesetzte Randbedingungen nicht gelöst werden kann.

Demnach sieht es die Erfindung gemäß dem vorbeschriebenen Verfahren vor, die nötigen Randbedingungen, die zur Lösung der Gleichungssysteme hinsichtlich der gewünschten Größen, d.h. der jeweiligen oben genannten Widerstände (Endzweige, gemeinsame Abschnitte) führen, vorzugeben. Z.B. kann dies dadurch erfolgen, dass die Pumpenkennlinien der Pumpen bekannt sind, beispielsweise als funktionaler Zusammenhang H (Q, n) = a x n² - b x n x Q - c x Q². Hierbei gibt H(Q, n) die Förderhöhe, also die Druckdifferenz über der Pumpe an in Abhängigkeit des Förderstromes Q und der Drehzahl n der Pumpe. a, b und c sind dabei für eine bestimmte Pumpe bekannte Konstanten. Alternativ könnte die Bestimmung der Förderhöhe mittels eines Differenzdrucksensors erfolgen.

Weiterhin kann die Anzahl der Variablen in den Gleichungen der jeweiligen betrachteten physikalischen Zusammenhänge, also z.B. den Rohrnetzgleichungen reduziert werden, nämlich erfindungsgemäß dadurch, dass für jedes Paar von Pumpen jeweils wenigstens ein Paar, insbesondere mehrere Paare von ausgewählten Betriebszuständen bei den Pumpen nacheinander eingestellt wird bzw. werden. Bei einem solchen Paar von Betriebszuständen wird der erste Betriebszustand der ersten Pumpe des Pumpenpaares zugeordnet und der zweite Betriebszustand der zweiten Pumpe des Pumpenpaares.

Dies kann beispielsweise dadurch erfolgen, dass bestimmte gewünschte Drehzahlen an den Pumpen eingestellt werden und/oder bestimmte Förderströme oder sonstige Größen. Hierbei kann es wiederum erfindungsgemäß vorgesehen sein, den Gesamtvolumenstrom im Rohrnetz oder aber die Teilvolumenströme in den Endzweigen zu bestimmen, wobei sich unmittelbar der Gesamtvolumenstrom aus der Summe der Teilvolumenströme ergibt. Die Volumenströme können dabei z.B. mittels Sensoren gemessen oder z.B. wie auch andere hydraulische Größen auch aus elektrischen Größen der Pumpen bestimmt werden. Derartige Pumpen, bei denen hydraulische Größen aus den elektrischen Größen bestimmt werden können, werden auch als beobachtbare Pumpen bezeichnet.

Somit können durch die Betrachtung jeweils von Paaren von Pumpen die physikalischen Zusammenhänge, insbesondere die Rohrnetzgleichungen des entstehenden Gleichungssystems, gelöst werden hinsichtlich der gewünschten Größe durch die Vorgabe einer genügenden Anzahl von Randbedingungen, z.B. anhand der vorgenannten Kriterien.

Aus den jeweils betrachteten Gleichungen der bekannten physikalischen Zusammenhänge kann sodann sowohl der Leitungswiderstand K_{IJ} des von den beiden betrachteten Pumpen P_{I} und P_{J} des ausgewählten Pumpenpaares gemeinsam genutzten Rohrabschnitts sowie auch jeweils der Endzweigwiderstand R_{IJ} des ausschließlich nur von der Pumpe P_{I} genutzten Endzweiges (bezogen auf das gerade betrachtete Teilnetz mit der Pumpe P_{J}) berechnet werden, so dass man anhand der Durchführung dieses Vorgehens für eine Vielzahl von möglichen Pumpenpaaren, gegebenenfalls für alle möglichen Pumpenpaare, sämtliche vorgenannten Widerstandswerte, bezogen auf die jeweilige Paarkonstellation, ermitteln kann.

Die so ermittelten Widerstandswerte R_{IJ} und K_{IJ}, die sich bei Betrachtung einer jeweiligen Paarung von zwei Pumpen P_{I} und P_{J} ergeben, können sodann als eine Matrix im mathematischen Sinne mit einer Anzahl von N Spalten und N Zeilen aufgefasst werden, wobei N die Anzahl der im untersuchten Rohrnetz befindlichen Pumpen ist. Diese Matrix kann anschließend einer weiteren Untersuchung unterzogen werden, um zur vollständigen Analyse des Rohrnetzes zu kommen.

Hierbei ist es insbesondere für die weitere Beschreibung des Verfahrens für den Fachmann ersichtlich, dass es zur Durchführung des Verfahrens nicht darauf ankommt, eine tatsächliche Matrixanordnung bei der Durchführung oder für die Durchführung des Verfahrens zu schaffen, also beispielsweise durch eine softwareseitige Umsetzung des Verfahrens auf einem Rechnersystem, sondern lediglich, dass in einem Rechnersystem, welches beispielsweise softwaregestützt die Analyse durchführt, die jeweiligen vorgenannten Widerstandswerte R_{IJ} und K_{IJ} abgespeichert sind, wobei es nicht darauf ankommt, dass diese auch in ihrer physikalischen Anordnung das jeweilige durch die Indizes I und J gegebene zweidimensionale Feld (Matrix) bilden. Wird also weiterhin in dieser Erfindungsbeschreibung von einer Matrix gesprochen, so bedeutet dies nicht zwingend die mathematische oder physikalische Anordnung der Widerstandswerte, sondern lediglich die logische Konstellation der Widerstandswerte zueinander, unabhängig davon wie die Werte technisch gehandhabt werden, also z.B. wie und wo sie gespeichert sind.

Das erfindungsgemäße Verfahren zeichnet sich besonders bevorzugt dadurch aus, dass nunmehr nach Erhalt der Vielzahl von Widerstandswerten R_{IJ} aus allen diesen Werten und insbesondere anschaulich aus der durch diese Werte gebildeten Matrix R_{IJ} zu jeder Pumpe P_{I} der Endzweigwiderstand (z.B. als R_{I} bezeichnet) bezüglich aller Pumpen des gesamten Rohrsystems ermittelt werden kann durch Suche des Minimums in der Spalte I der Matrix R_{IJ}, also durch Suche des Minimums in den Werten R_{IJ} bei einem festen I für alle möglichen J. Somit ist anhand dieser Beziehung aus der ermittelten Matrix bzw. aus sämtlichen Werten R_{IJ}, die im Rahmen der Berechnung anhand des oben genannten Verfahrens ermittelt wurden, sofortig der Endzweigwiderstand bekannt, der unmittelbar nur der jeweils betrachteten Pumpe zugeordnet ist und durch den somit nur diese eine Pumpe Fluid fördert, jedoch keine andere.

Aus der ermittelten Matrix K_{IJ}, d.h. allen berechneten Werten K_{IJ} zu den gewählten Pumpenpaaren kann der für alle Pumpen gemeinsame Rohrnetzwiderstand, d.h. der Widerstand des von allen Pumpen gemeinsamen Rohrnetzabschnittes, ermittelt werden durch Suche des Minimums aus allen Matrixeinträgen, bzw. des Minimums in allen Werten K_{IJ}. Dieser Minimum-Wert kann z.B. als R_{g} bezeichnet werden.

Nach Erhalt dieses Minimums (R_{g}) kann dieses in einer weiteren vorteilhaften Ausbildung des Verfahrens von allen Matrixeinträgen, bzw. von allen Werten K_{IJ} subtrahiert werden, so dass hierdurch zu jeder betrachteten Pumpe P_{I} diejenigen Pumpen P_{J} bestimmt werden können, die mit der betrachteten Pumpe P_{I} in einem Teilnetz angeordnet sind, die also durch gemeinsame Rohrabschnitte des Netzes fördern. Dies kann dadurch erfolgen, dass nach der Subtraktion des Minimums R_{g} diejenigen Matrixeinträge in den Zeilen J aufgesucht werden, die zu einer Spalte I einen Eintrag außerhalb eines vorgegebenen Werteintervalls aufweisen oder anders ausgedrückt dadurch dass alle diejenigen Werte K_{IJ} (für alle J) gesucht werden, die für ein festes I einen Wert außerhalb eines vorgegebenen Werteintervalls aufweisen. Werden solche Werte bei einem festen I bei einem bestimmten J gefunden, so erschließt sich hieraus dass die Pumpe P_{I} mit der Pumpe P_{J} in einem Teilnetz angeordnet ist.

Betrachtet man den physikalischen Zusammenhang rein ideal mathematisch, so müssten all diejenigen Pumpenpaarungen miteinander in einem Teilnetz angeordnet sein, bei denen der jeweilige Matrixeintrag nach der Subtraktion des Minimums einen Wert ungleich 0 aufweist. Hierbei ergibt sich jedoch die Problematik, dass die Matrixeinträge, also die Werte K_{IJ} im Rahmen einer Berechnung und/oder zumindest teilweisen Messung aufgrund physikalisch vorgegebener und mitunter fehlerbehafteter Randbedingungen oder mit Meßtoleranzen, wie beispielsweise anhand Drehzahl, Gesamt- oder Teilvolumenströme ermittelt werden. Somit werden selbst bei gleichen eingestellten Bedingungen nicht immer gleiche Ergebnisse erhalten, was dazu führen kann, dass nach der Subtraktion des aufgefundenen absoluten Minimums Werte in den Matrizenzellen verbleiben, die ideal-mathematisch 0 sein müssten, jedoch aufgrund der physikalischen Fehlerbehaftung oder der Toleranzen der Messwerte nicht den Wert 0 erreichen.

Insofern ist es bevorzugt erfindungsgemäß vorgesehen, nicht die Abweichung von 0 im mathematischen Sinne als Kriterium heranzuziehen, um die Teilnetze aufzufinden, sondern als Kriterium heranzuziehen, dass ein Eintrag in einer Matrixzelle einen Wert außerhalb eines vorgegebenen Werteintervalls aufweist, wobei eine derartige Vorgabe benutzerseitig vorgesehen sein kann, beispielsweise anhand bekannter Messungenauigkeiten oder Fehlertoleranzen und somit zu erwartender Streuung der Ergebnisse.

Werden nach der erstmaligen Subtraktion eines Minimums nunmehr nur noch Matrixeinträge betrachtet, die die Abweichung von dem vorgenannten Werteintervall aufweisen, so lassen sich hierdurch Teilnetze identifizieren, wonach für jedes identifizierte Teilnetz im Wesentlichen dasselbe erfindungsgemäße Verfahren erneut angewandt wird.

Es können nun durch Subtraktion des Minimums von allen Matrixeinträgen eines aufgefundenen Teilnetzes zu jeder Pumpe P_{I} des Teilnetzes diejenigen Pumpen P_{J} bestimmt werden, die mit der betrachteten Pumpe P_{I} wiederum in einem Teilnetz angeordnet sind. Hierzu können wiederum diejenigen Matrixeinträge in den Zeilen J aufgesucht werden, die zu einer Spalte I einen Eintrag außerhalb des vorgegebenen Werteintervalls aufweisen, wobei in diesem Fall nur das Minimum des betrachteten Teilnetzes von den Matrixeinträgen des Teilnetzes subtrahiert wurde. Das aufgefundene Minimum selbst gibt dabei wieder den Widerstandswert desjenigen Rohrabschnittes an, der von allen Pumpen des betrachteten Teilnetzes mit Fluid versorgt wird.

Dieses Verfahren lässt sich dabei iterativ soweit fortführen, bis keine weiteren Teilnetze mehr identifiziert werden können und somit auch die Widerstandwerte aller möglichen Rohrabschnitte des untersuchten Gesamtnetzes bekannt sind.

Für das erfindungsgemäße Verfahren ist der Gesamtvolumenstrom bzw. die Teilvolumenströme im Rohrnetz als wesentliche Randgröße genannt worden, um die Variablen in den zu lösenden Gleichungen zu reduzieren und zu einer Auflösung des jeweiligen betrachteten Gleichungssystems kommen zu können.

Es kann hierbei vorgesehen sein, dass der Gesamtvolumenstrom im Rohrnetz bestimmt wird durch einen zentralen Sensor, der in bekannter Weise innerhalb eines Rohrnetzes eingesetzt werden kann. Alternativ kann es ebenso vorgesehen sein, dass eine zentrale Pumpe hinsichtlich ihrer elektrischen Größen beobachtet wird, da es für den Fachmann bekannt ist, aus den elektrischen Größen einer beobachtbaren Pumpe die hydraulischen Größen dieser Pumpe zu ermitteln, insbesondere den Förderstrom und/oder die Förderhöhe. Alternativ kann es vorgesehen sein, den Durchfluss zentral oder dezentral indirekt über die Messung des Differenzdrucks zu bestimmen.

In gleicher Weise kann es auch vorgesehen sein, dass Teilvolumenströme in den Endzweigen bestimmt werden durch dezentrale Sensoren oder aber dezentral beobachtbare Pumpen, bei denen wiederum anhand der ermittelten elektrischen Größen auf den jeweiligen Teilvolumenstrom geschlossen werden kann. Der Gesamtvolumenstrom ergäbe sich somit durch die Summe der jeweiligen Teilvolumenströme.

Alternativ kann es vorgesehen sein, eine der soeben beschriebenen Möglichkeiten, den Durchfluss zu bestimmen, dezentral einzusetzen in dem Sinne, dass der Durchfluss an ausgewählten Verzweigungspunkten bestimmt wird, d.h. jeweils für mehrere Teilnetze, bei denen es sich nicht zwingend um die Endzweige handelt.

Es kann weiterhin verfahrensgemäß vorgesehen sein, dass anhand einer Analyse ausgewählter Paare von Pumpen die in der Folge verwendeten Paare von Pumpen auf die zur Erlangung des Ergebnisses erforderlichen Paare eingeschränkt werden oder zumindest ausgewählte Paare von Pumpen bei dem weiteren Verfahren nicht vermessen werden, für die aufgrund der Ergebnisse der vorherigen, insbesondere ersten Analyse kein weiterer Erkenntnisgewinn bzgl. des Rohrnetzes zu erwarten ist. Es müssen somit nicht zwingend alle möglichen Pumpenpaarungen auch tatsächlich ausgemessen werden.

Ein Ausführungsbeispiel ist anhand der nachfolgenden Figuren erläutert. Es zeigen:
- Figur 1: ein konkretes zu analysierendes Rohrnetz mit mehreren dezentralen Pumpen und einer Vielzahl von Rohrnetzabschnitten, denen entsprechende Widerstände R bzw. L zugeordnet sind
- Figur 2: dieselbe Darstellung des Rohrnetzes nach Figur 1 nach einer durchgeführten Rohrnetzanalyse, durch die sich Widerstände gemeinsamer Rohrleitungsabschnitte und Endzweigwiderstände und somit die Aufzweigungen des Rohrnetzes ergeben
- Figur 3: die vereinfachte zu betrachtende Topologie eines Teilbereichs des Gesamtnetzes bei Berücksichtigung von nur zwei Pumpen
- Figuren 4: Die Druckverhältnisse im H-Q-Diagramm
- Figur 5: die Matrix der Widerstandswerte R_{IJ}, d.h. der Endzweigwiderstände
- Figur 6: die Matrix der Widerstände der von zwei betrachteten Pumpen gemeinsam genutzten Rohrnetzabschnitte

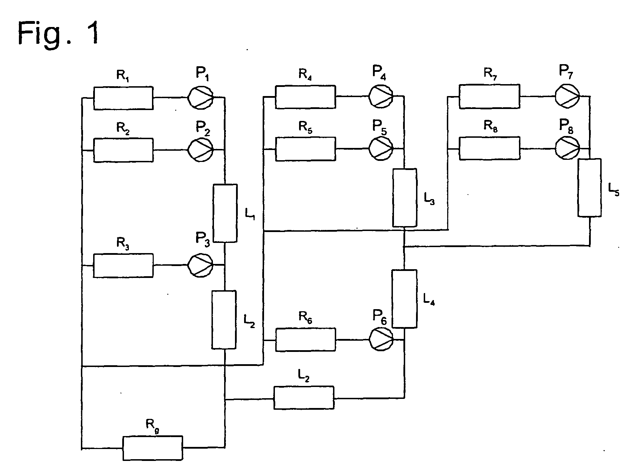

Die Figur 1 zeigt als ein Beispiel ein zu analysierendes Rohrnetz anhand dessen das erfindungsgemäße Verfahren erläutert werden kann. Das Rohrnetz umfasst eine Vielzahl von Pumpen P, sowie Rohrabschnitte durch die nur von jeweils einer Pumpe allein Fluid gefördert wird, wobei diese Rohrabschnitte einen Endzweigwiderstand R haben und Rohrabschnitte, durch die von mehreren Pumpen gefördert wird und die einen Widerstand L haben.

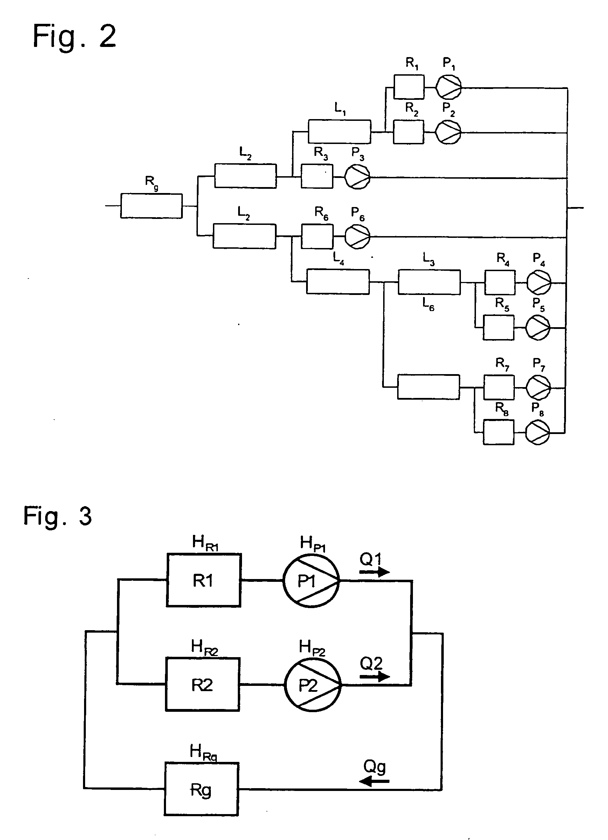

Die Figur 2 zeigt dasselbe Rohrnetz in einer anderen Darstellung, wobei diese Darstellung unmittelbar aus der Analyse des Rohrnetzes hergeleitet werden kann. Hierbei kann das Verfahren sukzessive die in der Abbildung von links nach rechts dargestellten Rohrstücke und Verzweigungen liefern. In einem ersten Schritt kann für das Beispielnetz aus Figur 1 die Rohrleitung mit dem Widerstand 1 bestimmt werden. In einem zweiten Schritt kann die Verzweigung in zwei Teilnetze sowie die Widerstandswerte der Zuleitungen berechnet werden, die in diesem konkreten Beispiel beide den Widerstandswert L₂ haben, usw.

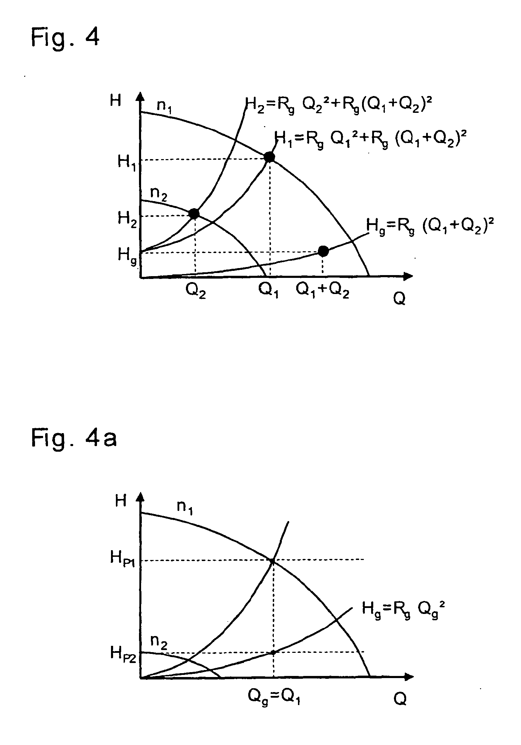

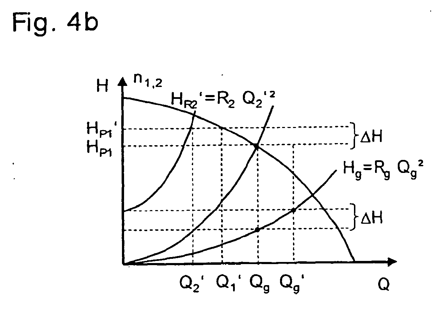

Zur Durchführung des Verfahrens zur Bestimmung der Leitungswiderstände wird ein Pumpenpaar herausgegriffen und separiert als ein Ausschnitt des Gesamtnetzes betrachtet. Dieser Ausschnitt kann dargestellt werden, wie es die Figur 3 zeigt. Die Druckverhältnisse, die in diesem System herrschen, beschreibt die Figur 4. Die Pumpenkennlinien gelten in dieser Ausführung als bekannt.

Hierbei gilt, dass sich der von einer Pumpe aufzubringende Druck zusammensetzt aus dem Druckabfall im gemeinsam genutzten Rohrnetzabschnitt R_{g}(Q₁+Q₂)² und dem Druckabfall in dem jeweiligen Endzweig, in dem sich die jeweilige Pumpe befindet R_{1,2}Q_{1,2}². Je nach Vorhandensein unterschiedlicher Komponenten zur Bestimmung der Volumenströme und/oder Differenzdrücke sind verschiedene Ausführungen zur Durchführung des Verfahrens möglich. Mittels des Verfahrens werden die Widerstände R₁ und R₂, sowie R_{g} gesucht.

In einer Ausführungsvariante kann das Verfahren wie folgt angewendet werden: Es wird ein einziges Paar von Betriebszuständen eingestellt, bei dem eine Pumpe P_{I} mit bekannter Drehzahl läuft und eine Pumpe P_{J} durch Zuschaltung auf diejenige Drehzahl eingestellt wird, ab der die zugeschaltete Pumpe P_{J} zum Gesamtvolumenstrom oder zu einem Teilvolumenstrom beiträgt. Exemplarisch soll es sich um die Pumpen P1 und P2 aus der Figur 3 handeln.

Zur Bestimmung von R₁ und R_{g} wird somit die Pumpe P₁ mit einer festen bekannten Drehzahl, z.B. der maximalen Drehzahl n₁ betrieben, so dass sich ein messbarer Durchfluss Q₁ ergibt, der bestimmt werden kann, z.B. mittels Durchflusssensor. Alle anderen Pumpe sind ausgeschaltet, d.h. der Gesamtvolumenstrom Q_{g} im betrachteten Teilnetz ist gleich Q₁.

Für die Pumpe P₂ wird die Drehzahl n₂,₀ bestimmt, ab der die Pumpe zum Gesamtvolumenstrom Q_{g} beiträgt. D.h. für Drehzahlen größer als n_{2,0} ist der von der Pumpe P₂ geförderte Volumenstrom größer als Null. Diese Drehzahl n_{2,0} kann als Nullförderdrehzahl der Pumpe P₂ bezeichnet werden. Beispielsweise kann sie bestimmt werden durch Messung des Gesamtvolumenstromes Q_{g} in Abhängigkeit der Drehzahl n₂. Die Nullförderdrehzahl ist erreicht, wenn die Pumpe P₂ anfängt zum Gesamtvolumenstrom beizutragen.

In dem so gewählten Betriebspunkt ist der von der Pumpe P₂ aufgebaute Druck H_{P2} gleich dem Druckverlust H_{g} des gemeinsam genutzten Rohrnetzabschnittes, also gleich H_{P2} = H_{g} = R_{g}Q_{g}². Diesen Zusammenhang verdeutlich die Figur 4a.

Dieser Druckverlust ist bekannt, da die Drehzahl, die Kennlinie und der Förderstrom (Q₂ =0) der Pumpe P₂ bekannt ist. Es gilt H_{P2}(n_{2,0}, Q₂=0) = R_{g}Q_{g}².

Damit ist dann der Widerstand des von den beiden Pumpen P₁ und P₂ gemeinsam genutzten Rohrabschnittes bekannt. Er ergibt sich zu: R_{g}= H_{P2}(n_{2,0}, Q₂=0) Q_{g}². Er setzt sich aus bekannten, gemessenen oder berechneten Größen zusammen. Im Sinne des allgemeinen Beschreibungsteils handelt es sich bei dem hier ermittelten Wert R_{g} um den Wert K₁₂ der Matrix der Widerstände der gemeinsam genutzten Endzweige zu den Pumpen 1 und 2. Bezogen auf das Rohrnetzbeispiel in der Figur 1 bzw. der Figur 2 hat dieser Widerstand bzw. Matrixeintrag K₁₂ dein Wert L₁+L₂+R_{g}.

Der von der Pumpe P₁ aufgebaute Druck ist gegeben durch H_{P1}=R₁Q₁² + R_{g}Q_{g}², wobei bei dieser Ausführungsvariante der Gesamtvolumenstrom Q_{g} durch die Pumpe P₁ fließt, da die zweite Pumpe auf die Nullförderdrehzahl eingestellt wurde, so dass gilt Q_{g}=Q₁. Unter Berücksichtigung des obigen Ergebnisses für R_{g} ergibt sich durch Substitution in die Gleichung H_{P1}=R₁Q₁² + R_{g}Q_{g}², dass R₁ = (H_{P1}(n₁,Q_{g}) -H_{P2}(n_{2,0}, Q₂=0)) /Q_{g}².

Somit ist auch der Widerstand R₁ des Endzweiges bekannt, der nur von der Pumpe P₁ mit Fluid versorgt wird, da er sich ebenso auf bekannte berechnete und/oder bestimmte Größen zurückführen lässt anhand der gewählten Randbedingungen.

Der Wert R₁ entspricht bzgl. des allgemeinen Beschreibungsteils dem Widerstandswert R₁₂, d.h. dem Endzweigwiderstand der Pumpe P₁, die im Teilnetz mit der Pumpe P₂ steht. Bezogen auf das Beispiel der Figuren 1 und 2 ist dieser Widerstandwert R₁₂ gleich R₁.

Der Wert R₂ = R₂₁ kann hier durch Tausch der Pumpenrollen ermittelt werden.

Unter der Voraussetzung, dass der gemeinsam genutzte Leitungswiderstand bekannt ist, z.B. durch die vorgenannte Bestimmung, kann der Widerstand eines Endzweiges alternativ auch wie folgt ermittelt werden, wobei die Zusammenhänge graphisch durch die Figur 4b verdeutlicht werden:
Zunächst wird wie oben beschrieben die Nullförderdrehzahl n_{2,0} für die zweite Pumpe eingestellt. Der Gesamtvolumenstrom Q_{g} oder die Summe der Teilvolumenströme wird gemessen und festgehalten. Die Drehzahl der zweiten Pumpe wird auf n₂ erhöht und es erhöht sich dadurch der Gesamtvolumenstrom auf den Wert Q_{g}. Gleichzeitig nimmt der Druckverlust im gemeinsam genutzten Rohrnetz zu um den Betrag ΔH. Der von der Pumpe 1 zu erbringende Druck ist dann gegeben durch H_{P1} = H_{P1} + ΔH = H_{P1} + R_{g} (Q_{g}² - Q_{g}² ). Anhand der Pumpenkennlinie der ersten Pumpe kann der neue Förderstrom Q₁ bestimmt werden. Da der Gesamtvolumenstrom gleich der Summe aller Zweigströme ist, folgen hieraus auch Q₂ = Q_{g} - Q₁ und unter der Verwendung der Pumpenkennlinie auch H_{P2}. Andererseits ist der von der Pumpe 2 aufzubringende Differenzdruck gegeben durch H_{P2} = R₂Q₂² + R_{g}Q_{g}². Hieraus folgt dann R₂ = (H_{P2} - R_{g}Q_{g}²) / Q₂².

Somit ist auf diese alternative Weise ebenfalls R₂ = R₂₁ bestimmt.

Es können die verfahrensgemäß bestimmten Widerstandswerte R₁₂, R₂₁, und K₁₂ bzw. K₂₁ in eine Matrix eingetragen werden. Dabei gilt, dass K₁₂ = K₂₁, da der gemeinsame Rohrabschnitt gleich ist, unabhängig ob man Pumpe 1 in Kombination mit Pumpe 2 betrachtet oder umgekehrt.

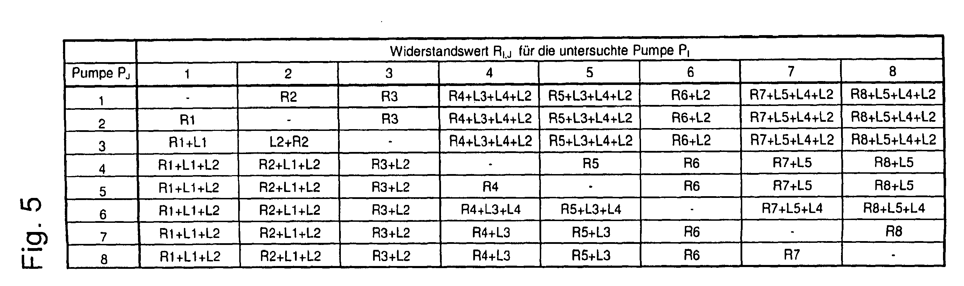

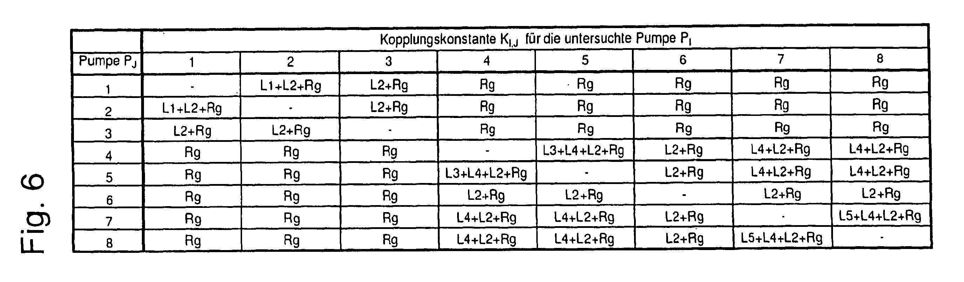

Die Figuren 5 und 6 zeigen die Matrizen R_{IJ} und K_{IJ} für die möglichen Pumpenpaarungen des Beispiels aus den Figuren 1 und 2. Die oben berechneten Werte finden sich an den entsprechenden Matrixzellen wieder.

Das erfindungsgemäße Verfahren, wie gerade beschrieben kann für weitere Pumpenpaare durchgeführt werden, bis die Matrizen vollständig gefüllt sind. Hierbei ist zu berücksichtigen, dass in den Figuren 5 und 6 die mathematisch theoretischen Werte in Form der Widerstandsvariablen der Figuren 1 und 2 dargestellt sind. Bei Durchführung des Verfahrens an einem realen Rohrnetz würden hier berechnete reale Zahlen stehen.

Es ist nun ersichtlich, dass sich bezogen auf das exemplarische Rohrnetz der Figur 1 bzw. Figur 2 der Widerstand des Endzweiges zu jeder betrachteten Pumpe I ermitteln lässt durch Suche des Minimums in der Matrixspalte I. Die Pumpe 1 hat somit im Endzweig den Widerstand R1, die Pumpe 2 den Widerstand R2 und so fort. Bei real berechneten Matrixeinträgen liessen sich so die realen Widerstände herausfinden.

Der Widerstand R_{g} des von allen Pumpen gemeinsam genutzten Rohrabschnittes kann ermittelt werden durch Suche des absoluten Minimums unter allen Matrixeintragen der Matrix K_{IJ}. Hier ist in der Figur 6 erkennbar, dass der Wert R_{g} den minimalen Wert bildet.

Wird nun dieser absolut minimale Wert R_{g} von allen Matrixeinträgen, außer denen, bei denen I=J ist, subtrahiert, so lassen sich alle diejenigen Pumpen ermitteln, die miteinander noch in einem Teilnetz angeordnet sind. Diese Pumpen lassen sich dadurch identifizieren, dass der Matrixeintrag K_{IJ} der durch die Subtraktion erhaltenen neuen Matrix einen Wert ungleich Null aufweist, bezogen auf dieses theoretisch mathematische Modell. Vorangehend wurde erwähnt, dass bei realen Berechnungswerten vorzugsweise überprüft wird, ob ein Matrixeintrag ausserhalb eines vorgegebenen Werteintervalls liegt.

Würde man also hier von der Matrix der Figur 6 den Wert R_{g} von allen Matrixeinträgen abziehen, so wäre erkennbar, dass die Pumpe 1 noch mit den Pumpen 2 und 3 in einem Teilnetz angeordnet ist, ebenso wie konsequenter Weise die Pumpe 2 mit Pumpe 1 und 3 und die Pumpe 3 mit den Pumpen 1 und 2.

Gleichsam ist hier erkennbar, dass die Pumpe 4 noch mit den Pumpen 5,6,7 und 8 in einem Teilnetz angeordnet ist. Es ergeben sich hier also Teilnetzmatrizen K_{IJ} für I,J = 1 bis 3 und für l,J = 4 bis 8. Diese Teilmatrizen können demselben Verfahren unterzogen werden, d.h. es wird jetzt nur in den Teilmatrizen das jeweilige Minimum gesucht, welches hier bzgl. beider Teilnetze durch L₂ gegeben ist. Dieses wird sodann wieder Subtrahiert und so fort, bis dass alle Teilnetze ausgewertet sind und es keine Teilnetze mehr gibt. Es sind sodann auch alle einzelnen Widerstände des in den Figuren 1 und 2 vorkommenden Rohrnetzabschnitte ermittelt und können z.B. gespeichert werden für spätere Anwendungen, wie z.B. Steuerungen oder Regelungen.

In diesem Beispiel wurde nur eine Möglichkeit konkret beschrieben um nötige Randbedingungen zu bieten und so die Gleichungssysteme nach den gewünschten Unbekannten aufzulösen. Es gibt jedoch noch beliebig viele andere Möglichkeiten, anhand von Paaren von Betriebszuständen die Variablen in den Gleichungssystemen zu verringern und diese aufzulösen.

Z.B. kann in einer anderen Ausführungsvariante ein erstes Paar von Betriebszuständen eingestellt werden, bei dem eine Pumpe P_{I} mit bekannter Drehzahl läuft und eine Pumpe P_{J} ausgeschaltet ist. In einem zweiten Paar von Betriebszuständen läuft eine Pumpe P_{J} mit bekannter Drehzahl und eine Pumpe P_{I} ist ausgeschaltet . In einem dritten Paar von Betriebszuständen läuft eine der beiden Pumpen mit bekannter Drehzahl und die andere Pumpe wird auf den gleichen Förderstrom eingestellt.

In einer wiederum anderen Variante kann ein erstes Paar von Betriebszuständen eingestellt werden, bei dem beide Pumpen mit beliebigen ersten Drehzahlen laufen und ein zweites Paar von Betriebszuständen eingestellt werden, bei dem beide Pumpen mit beliebigen zweiten Drehzahlen laufen.

In einer noch anderen Variante kann ein erstes Paar von Betriebszuständen eingestellt werden, bei dem eine Pumpe P_{I} mit bekannter Drehzahl, insbesondere maximaler Drehzahl läuft und eine Pumpe P_{J} ausgeschaltet ist und ein zweites Paar von Betriebszuständen eingestellt werden, bei dem eine Pumpe P_{J} mit bekannter Drehzahl, insbesondere maximaler Drehzahl läuft und eine Pumpe P_{I} ausgeschaltet ist, und ein drittes Paar von Betriebszuständen eingestellt werden, bei dem beide Pumpen mit bekannten Drehzahlen, insbesondere maximalen Drehzahlen laufen.

## Patentansprüche

1. Verfahren zur Durchführung einer Rohrnetzanalyse eines Rohmetzes, bei dem jedem Endzweig eines Rohrnetzes eine dezentrale Pumpe zugeordnet ist/wird, **dadurch gekennzeichnet, dass** für Paare von Pumpen jeweils wenigstens ein Paar von ausgewählten Betriebszuständen bei den Pumpen eingestellt wird, wobei für jedes Paar von Betriebszuständen der Gesamtvolumenstrom im Rohrnetz oder die Teilvolumenströme in den Endzweigen bestimmt werden, wonach der Leitungswiderstand K_{IJ} der von beiden Pumpen gemeinsam genutzten Rohrabschnitte und der Zweigwiderstand R_{IJ} des ausschließlich nur von der Pumpe P_{I} genutzten Endzweiges berechnet werden anhand der bestimmten und durch die eingestellten Betriebszustände gegebenen Größen.

2. Verfahren nach Anspruch 1, **dadurch gekennzeichnet, dass** alle möglichen Kombinationen von je zwei Pumpen gewählt werden.

3. Verfahren nach Anspruch 1 oder 2, **dadurch gekennzeichnet, dass** anhand einer Analyse ausgewählter Paare von Pumpen die in der Folge verwendeten Paare von Pumpen auf die zur Erlangung des Ergebnisses erforderlichen Paare eingeschränkt werden oder zumindest ausgewählte Paare von Pumpen bei dem weiteren Verfahren nicht vermessen werden, für die aufgrund der Ergebnisse der ersten Analyse kein weiterer Erkenntnisgewinn bzgl. des Rohrnetzes zu erwarten ist.

4. Verfahren nach einem der vorherigen Ansprüche, **dadurch gekennzeichnet, dass** nach Auswahl eines Paares von Pumpen P_{I}, P_{J} und des dadurch definierten Teilnetzes des gesamten Rohrnetzes sichergestellt wird, dass trotz des Betriebs der Pumpen P_{I}, P_{J} eine Fluidförderung durch nicht zum Teilnetz gehörende Bereiche des Rohrnetzes verhindert ist, insbesondere durch Magnetventile oder Rückflussverhinderer.

5. Verfahren nach einem der Ansprüche 1 bis 4, **dadurch gekennzeichnet, dass** ein Paar von Betriebszuständen eingestellt wird, bei dem eine Pumpe P_{I} mit bekannter Drehzahl läuft und eine Pumpe P_{J} durch Zuschaltung auf diejenige Drehzahl eingestellt wird, ab der die zugeschaltete Pumpe P_{J} zum Gesamtvolumenstrom oder zu einem Teilvolumenstrom beiträgt.

6. Verfahren nach Anspruch 5, **dadurch gekennzeichnet, dass** ein nächstes Paar von Betriebszuständen eingestellt wird, bei dem die Drehzahl der Pumpe P_{J} auf eine andere bekannte Drehzahl erhöht wird.

7. Verfahren nach einem der Ansprüche 1 bis 4, **dadurch gekennzeichnet, dass** ein erstes Paar von Betriebszuständen eingestellt wird, bei dem eine Pumpe P_{I} mit bekannter Drehzahl läuft und eine Pumpe P_{J} ausgeschaltet ist und ein zweites Paar von Betriebszuständen eingestellt wird, bei dem eine Pumpe P_{J} mit bekannter Drehzahl läuft und eine Pumpe P_{I} ausgeschaltet ist und ein drittes Paar von Betriebszuständen eingestellt wird, bei dem eine der beiden Pumpen mit bekannter Drehzahl läuft und die andere Pumpe auf den gleichen Förderstrom eingestellt wird.

8. Verfahren nach einem der Ansprüche 1 bis 4, **dadurch gekennzeichnet, dass** ein erstes Paar von Betriebszuständen eingestellt wird, bei dem beide Pumpen mit beliebigen ersten Drehzahlen laufen und ein zweites Paar von Betriebszuständen eingestellt wird, bei dem beide Pumpen mit beliebigen zweiten Drehzahlen laufen.

9. Verfahren nach einem der Ansprüche 1 bis 4, **dadurch gekennzeichnet, dass** ein erstes Paar von Betriebszuständen eingestellt wird, bei dem eine Pumpe P_{I} mit bekannter Drehzahl, insbesondere maximaler Drehzahl läuft und eine Pumpe P_{J} ausgeschaltet ist, und ein zweites Paar von Betriebszuständen eingestellt wird, bei dem eine Pumpe P_{J} mit bekannter Drehzahl, insbesondere maximaler Drehzahl läuft und eine Pumpe P_{I} ausgeschaltet ist, und ein drittes Paar von Betriebszuständen eingestellt wird, bei dem beide Pumpen mit bekannten Drehzahlen, insbesondere maximalen Drehzahlen laufen

10. Verfahren nach einem der vorherigen Ansprüche 1 bis 9, **dadurch gekennzeichnet, dass** aus der ermittelten Matrix R_{IJ} zu jeder Pumpe P_{I} der Endzweigwiderstand bezüglich aller Pumpen des gesamten Rohrsystem ermittelt wird durch Suche des Minimums in der Spalte I der Matrix R_{IJ}.

11. Verfahren nach einem der vorherigen Ansprüche 1 bis 10, **dadurch gekennzeichnet, dass** aus der ermittelten Matrix K_{IJ} der für alle Pumpen gemeinsame Rohrnetzwiderstand ermittelt wird durch Suche des Minimums aus allen Matrixeinträgen.

12. Verfahren nach Anspruch 11, **dadurch gekennzeichnet, dass** durch Subtraktion des ermittelten Minimums von allen Matrixeinträgen zu jeder betrachteten Pumpe P_{I} diejenigen Pumpen P_{J} bestimmt werden, die mit der betrachteten Pumpe P_{I} in einem Teilnetz angeordnet sind, durch Aufsuchen derjenigen Matrixeinträge in den Zeilen J, die zu einer Spalte I einen Eintrag ausserhalb eines vorgegebenen Werteintervalls aufweisen.

13. Verfahren nach Anspruch 12, **dadurch gekennzeichnet, dass** durch Subtraktion des Minimums von allen Matrixeinträgen eines aufgefundenen Teilnetzes zu jeder Pumpe des Teilnetzes P_{I} diejenigen Pumpen P_{J} bestimmt werden, die mit der betrachteten Pumpe P_{I} wiederum in einem Teilnetz angeordnet sind, durch Aufsuchen derjenigen Matrixeinträge in den Zeilen J, die zu einer Spalte I einen Eintrag ausserhalb eines vorgegebenen Werteintervalls aufweisen.

14. Verfahren nach Anspruch 13, **gekennzeichnet durch** die iterative Ausführung der Schritte nach Anspruch 13, bis dass keine weiteren Teilnetze mehr ermittelt werden.

15. Verfahren nach einem der vorherigen Ansprüche 1 bis 14, **dadurch gekennzeichnet, dass** der Gesamtvolumenstrom im Rohrnetz bestimmt wird durch einen zentralen Sensor oder eine zentrale beobachtbare Pumpe.

16. Verfahren nach einem der vorherigen Ansprüche 1 bis 15, **dadurch gekennzeichnet, dass** die Teilvolumenströme in den Endzweigen bestimmt werden durch dezentrale Sensoren oder dezentrale beobachtbare Pumpen.

## Claims

1. Method for carrying out a pipe network analysis of a pipe network, in which each end branch of a pipe network is assigned a decentral pump, **characterized in that** for pairs of pumps in each case at least one pair of selected operating conditions are set at the pumps, the total volume flow in the pipe network or the partial volume flows in the end branches being determined for each pair of operating conditions, after which the line resistance K_{IJ} of the tube sections used in common by both pumps and of the branch resistance R_{IJ} of the end branch used exclusively only by the pump P_{I} are calculated with the aid of the specific variables and those specified by the set operating conditions.

2. Method according to Claim 1, **characterized in that** all possible combinations of two pumps each are selected.

3. Method according to Claim 1 or 2, **characterized in that** with the aid of an analysis of selected pairs of pumps the pairs of pumps arranged in sequence are restricted to the pairs required to achieve the results, or at least selected pairs of pumps for which no further varying in knowledge regarding the pipe network is to be expected are not measured in the further process.

4. Method according to one of the preceding claims, **characterized in that** after selection of a pair of pumps P_{I}, P_{J} and of the partial network, thereby defined, of the entire pipe network it is ensured that despite the operation of the pumps P_{I}, P_{J} conveyance of fluid through regions of the pipe network not belonging to the partial network is prevented, in particular by soleroid valves or nonreturn valves.

5. Method according to one of Claims 1 to 4, **characterized in that** a pair of operating conditions is set for which a pump P_{I} runs at a known rotational speed, and the pump P_{J} is set by switching to that rotational speed from which the switched pump P_{J} contributes to the total volume flow or to a partial volume flow.

6. Method according to Claim 5, **characterized in that** a subsequent pair of operating conditions is set in which the rotational speed of the pump P_{J} is increased to a different known rotational speed.

7. Method according to one of Claims 1 to 4, **characterized in that** a first pair of operating conditions is set in the case of which one pump P_{I} of known rotational speed is running and one pump P_{J} is switched off, and a second pair of operating conditions is set in the case of which one pump P_{J} of known rotational speed is running and one pump P_{I} is switched off, and a third pair of operating conditions is set in the case of which one of the two pumps is running with a known rotational speed and the other pump is set to the same delivery flow.

8. Method according to one of Claims 1 to 4, **characterized in that** a first pair of operating conditions is set in the case of which both pumps run at any desired first rotational speeds, and a second pair of operating conditions is set in the case of which both pumps run at any desired second rotational speeds.

9. Method according to one of Claims 1 to 4, **characterized in that** a first pair of operating conditions is set in the case of which one pump P_{I} is running at a known rotational speed, in particular maximum rotational speed, and one pump P_{J} is switched off, and a second pair of operating conditions is set in the case of which one pump P_{J} is running at a known rotational speed, in particular maximum rotational speed, and one pump P_{I} is switched off, and a third pair of operating conditions is set in the case of which both pumps are running at known rotational speeds, in particular maximum rotational speeds.

10. Method according to one of the preceding Claims 1 to 9, **characterized in that** the end branch resistance relating to all the pumps of the entire pipe system is determined from the determined matrix R_{IJ} relating to each pump P_{I} by searching for the minimum in the column I of the matrix R_{IJ}.

11. Method according to one of the preceding Claims 1 to 10, **characterized in that** the pipe network resistance common to all pumps is determined from the determined matrix K_{IJ} by searching for the minimum from all matrix entries.

12. Method according to Claim 11, **characterized in that** the minimum is subtracted from all the matrix entries related to each considered pump P_{I} in order to determine those pumps P_{J} which are arranged with the considered pump P_{I} in a partial network by locating those matrix entries in the rows J which have an entry relating to a column I outside a prescribed interval of values.

13. Method according to Claim 12, **characterized in that** the minimum is subtracted from all matrix entries of a located partial network relating to each pump of the partial network P_{I} in order to determine those pumps P_{J} which are, in turn, arranged with the considered pump P_{I} in a partial network by locating those matrix entries in the rows J which have an entry relating to a column I outside a prescribed interval of values.

14. Method according to Claim 13, **characterized by** the iterative execution of the steps according to Claim 13 until no further partial networks are determined.

15. Method according to one of the preceding Claims 1 to 14, **characterized in that** the total volume flow in the pipe network is determined by a central sensor or a central observable pump.

16. Method according to one of the preceding Claims 1 to 15, **characterized in that** the partial volume flows in the end branches are determined by decentral sensors or decentral observable pumps.

## Revendications

1. Procédé pour réaliser une analyse d'un réseau de tuyauteries, avec lequel une pompe décentralisée est/sera associée à chaque branche finale d'un réseau de tuyauteries, **caractérisé en ce que** pour des paires de pompes, au moins une paire d'états opérationnels choisis est à chaque fois réglée au niveau des pompes, le débit volumique total dans le réseau de tuyauteries ou les débits volumiques partiels dans les branches finales étant définis pour chaque paire d'états opérationnels, après quoi la résistance de ligne K_{IJ} des portions de tuyauterie utilisées en commun par les deux pompes et la résistance de branche R_{IJ} de la branche finale utilisée exclusivement seulement par la pompe P_{I} sont calculées à l'aide des valeurs définies et données par les états opérationnels réglés.

2. Procédé selon la revendication 1, **caractérisé en ce que** toutes les combinaisons possibles de deux pompes chacune sont choisies.

3. Procédé selon la revendication 1 ou 2, **caractérisé en ce que** les paires de pompes utilisées par la suite sont limitées aux paires nécessaires pour atteindre le résultat à l'aide d'une analyse de paires de pompes choisies, ou alors au moins des paires de pompes choisies ne sont pas jaugées lors de la suite du procédé pour lesquelles les résultats de la première analyse ne laissent attendre l'acquisition d'aucune connaissance supplémentaire concernant le réseau de tuyauteries.

4. Procédé selon l'une des revendications précédentes, **caractérisé en ce qu'**après la sélection d'une paire de pompes P_{I}, P_{J} et du réseau partiel du réseau de tuyauteries total ainsi défini, il est garanti que malgré le fonctionnement des pompes P_{I}, P_{J}, un transport de fluide à travers des zones du réseau de tuyauteries ne faisant pas partie du réseau partiel est empêché, notamment par des électrovannes ou des clapets anti-retour.

5. Procédé selon l'une des revendications 1 à 4, **caractérisé en ce qu'**une paire d'états opérationnels est réglée, avec laquelle une pompe P_{I} tourne à une vitesse de rotation connue et une pompe P_{J} est réglée par mise en circuit à la vitesse de rotation à partir de laquelle la pompe P_{J} mise en circuit contribue au débit volumique total ou à un débit volumique partiel.

6. Procédé selon la revendication 5, **caractérisé en ce qu'**une paire suivante d'états opérationnels est réglée, avec laquelle la vitesse de rotation de la pompe P_{J} est accrue à une autre vitesse de rotation connue.

7. Procédé selon l'une des revendications 1 à 4, **caractérisé en ce qu'**une première paire d'états opérationnels est réglée, avec laquelle une pompe P_{I} tourne à une vitesse de rotation connue et une pompe P_{J} est arrêtée, et une deuxième paire d'états opérationnels est réglée, avec laquelle une pompe P_{J} tourne à une vitesse de rotation connue et une pompe P_{I} est arrêtée, et une troisième paire d'états opérationnels est réglée, avec laquelle l'une des deux pompes tourne à une vitesse de rotation connue et l'autre pompe est réglée sur le même débit de refoulement.

8. Procédé selon l'une des revendications 1 à 4, **caractérisé en ce qu'**une première paire d'états opérationnels est réglée, avec laquelle les deux pompes tournent à des premières vitesses de rotation quelconques, et une deuxième paire d'états opérationnels est réglée, avec laquelle les deux pompes tournent à des deuxièmes vitesses de rotation quelconques.

9. Procédé selon l'une des revendications 1 à 4, **caractérisé en ce qu'**une première paire d'états opérationnels est réglée, avec laquelle une pompe P_{I} tourne à une vitesse de rotation connue, notamment une vitesse de rotation maximale, et une pompe P_{J} est arrêtée, et une deuxième paire d'états opérationnels est réglée, avec laquelle une pompe P_{J} tourne à une vitesse de rotation connue, notamment une vitesse de rotation maximale, et une pompe P_{I} est arrêtée, et une troisième paire d'états opérationnels est réglée, avec laquelle les deux pompes tournent à des vitesses de rotation connues, notamment des vitesses de rotation maximales.

10. Procédé selon l'une des revendications précédentes 1 à 9, **caractérisé en ce que** la résistance de branche finale pour chaque pompe P_{I} en référence à toutes les pompes de l'ensemble du système de tuyauteries est déterminée à partir de la matrice R_{IJ} déterminée en recherchant le minimum dans la colonne I de la matrice R_{IJ}.

11. Procédé selon l'une des revendications précédentes 1 à 10, **caractérisé en ce que** la résistance du réseau de tuyauteries, commune à toutes les pompes, est déterminée à partir de la matrice K_{IJ} déterminée en recherchant le minimum de tous les contenus de la matrice.

12. Procédé selon la revendication 11, **caractérisé en ce que** par soustraction du minimum déterminé de tous les contenus de matrice en rapport avec chaque pompe P_{I} considérée sont définies les pompes P_{J} qui sont disposées dans un réseau partiel avec la pompe P_{I} considérée en recherchant les contenus de matrice dans les lignes J qui présentent pour une colonne I un contenu en dehors d'une fourchette de valeurs prédéfinie.

13. Procédé selon la revendication 12, **caractérisé en ce que** par soustraction du minimum de tous les contenus de matrice d'un réseau partiel trouvé en rapport avec chaque pompe du réseau partiel P_{I} sont définies les pompes P_{J} qui sont à leur tour disposées dans un réseau partiel avec la pompe P_{I} considérée en recherchant les contenus de matrice dans les lignes J qui présentent pour une colonne I un contenu en dehors d'une fourchette de valeurs prédéfinie.

14. Procédé selon la revendication 13, **caractérisé par** l'exécution itérative des étapes selon la revendication 13 jusqu'à ce qu'aucun réseau partiel supplémentaire ne soit plus déterminé.

15. Procédé selon l'une des revendications précédentes 1 à 14, **caractérisé en ce que** le débit volumique total dans le réseau de tuyauteries est défini par un capteur central ou une pompe pouvant être observée centralisée.

16. Procédé selon l'une des revendications précédentes 1 à 15, **caractérisé en ce que** les débits volumiques partiels dans les branches finales sont définis par des capteurs décentralisés ou des pompes pouvant être observées décentralisées.
